# EUROPÄISCHE PATENTANMELDUNG

(11) **EP 4 696 576 A1**
(43) Veröffentlichungstag der Anmeldung: **18.02.2026**
(21) Anmeldenummer: 25188425.0
(22) Anmeldetag: 09.07.2025
(51) Int. Cl.: B60W 30/16

(54) **VERFAHREN ZUM BETREIBEN EINES ASSISTENZSYSTEMS EINES EGO-FAHRZEUGS**

(30) Priorität: 13.08.2024 DE 102024207718
(71) Anmelder: VOLKSWAGEN AG, 38440 Wolfsburg (DE)
(72) Erfinder: Detering, Stefan, 38440 Wolfsburg (DE); Tarasow, Alex, 38440 Wolfsburg (DE); Kutsenok, Denis, 38440 Wolfsburg (DE)

(57) **Zusammenfassung**

Die Erfindung betrifft ein Verfahren zum Betreiben eines Assistenzsystems eines Ego-Fahrzeugs (1) zur Längsregelung des Ego-Fahrzeugs (1) mittels eines geschwindigkeitsabhängigen Wunschabstands zu einem vorausfahrenden Fahrzeug (2). Die Erfindung sieht vor, dass bei einer Fahrbahn (13) mit einem eine Verzweigungsstelle (6) ausbildenden Verzweigungsbereich (5), bei dem in einem Abzweigungsbereich (20) mindestens zwei Abbiegefahrstreifen (3, 4) in die gleiche Fahrtrichtung geführt werden, der Abzweigungsbereich (20) in mindestens zwei aneinandergrenzende Regelungsbereiche (7, 8, 9, 10) unterteilt wird, in denen die Längsregelung des Ego-Fahrzeugs (1) mit einer unterschiedlichen Regelungscharakteristik vorgegeben wird.

## Beschreibung

Die Erfindung betrifft ein Verfahren zum Betreiben eines Assistenzsystems eines Ego-Fahrzeugs zur Längsregelung des Ego-Fahrzeugs mittels eines geschwindigkeitsabhängigen Wunschabstands zu einem vorausfahrenden Fahrzeug.

In Fahrzeugen werden zur Steuerung des Fahrbetriebs des Fahrzeugs in zunehmendem Maße Assistenzsysteme eingesetzt, um den Fahrer des Fahrzeugs in bestimmten Fahrsituationen oder bei bestimmten Bewegungsvorgängen des Fahrzeugs zu unterstützen beziehungsweise zu entlasten. Derartige Assistenzsysteme sind in Fahrzeugen mittlerweile in vielfältigen Ausführungsformen im Gebrauch, beispielsweise als Elektronische Stabilitätsprogramme wie ESP oder ESC, als Notbremsassistent, als Spurhalteassistent, als Überholassistent, als Abbiegeassistent, als Anfahrassistent, als Stauassistent als Parkassistent. oder zur Längsregelung des Fahrzeugs beispielsweise mittels eines Abstandsassistenten ACC, bei dem abhängig von der Geschwindigkeit des oftmals als Ego-Fahrzeug bezeichneten eigenen Fahrzeugs ein Wunschabstand des Ego-Fahrzeugs zu einem vorausfahrenden Fahrzeug eingestellt werden kann.

Aus der DE 10 2015 203 208 A1 ist hierzu ein automatisches Spurwechselassistenzsystem für ein Fahrzeug mit einer automatischen Querführung des Fahrzeugs bekannt. Bei diesem Spurwechselassistenzsystem wird ein Spurwechselwunsch des Fahrers über einen vom Fahrer betätigbaren Blinkerhebel am Lenkstock oder am Lenkrad signalisiert und abhängig von der Betätigung des Blinkerhebels ein automatisiertes Spurwechselmanöver von einer Ausgangsfahrspur auf eine benachbarte Nebenfahrspur mit zumindest automatischer Querführung des Fahrzeugs durchgeführt.

Der Erfindung liegt die Aufgabe zugrunde, ein Verfahren zum Betreiben eines Assistenzsystems eines Ego-Fahrzeugs zur Längsregelung des Ego-Fahrzeugs mittels eines geschwindigkeitsabhängigen Wunschabstands zu einem vorausfahrenden Fahrzeug anzugeben, bei dem die Längsregelung auch bei einem manuell durchgeführten Spurwechsel und damit bei einer von einem Bediener des Ego-Fahrzeugs vorgenommen Querführung des Fahrzeugs auf einfache Weise für einen Bediener des Ego-Fahrzeugs komfortabel realisiert ist.

Diese Aufgabe wird erfindungsgemäß durch ein Verfahren zum Betreiben eines Assistenzsystems eines Ego-Fahrzeugs zur Längsregelung des Ego-Fahrzeugs mit den im Patentanspruch 1 angeführten Merkmalen gelöst.

Vorteilhafte Weiterbildungen des erfindungsgemäßen Verfahrens zum Betreiben eines Assistenzsystems eines Ego-Fahrzeugs sind Bestandteil der weiteren Patentansprüche.

Beim erfindungsgemäßen Verfahren zum Betreiben eines Assistenzsystems eines Ego-Fahrzeugs zur Längsregelung eines Ego-Fahrzeugs mittels eines geschwindigkeitsabhängigen Wunschabstands zu einem vorausfahrenden Fahrzeug, wird die Längsregelung des Ego-Fahrzeugs auch bei einer speziellen Verkehrsführung der Fahrbahn, bei der ein eine Verzweigungsstelle ausbildender Verzweigungsbereich einen Abzweigungsbereich aufweist, in dem mindestens zwei Abbiegefahrstreifen in die gleiche Fahrtrichtung abzweigen, für den Fahrer des Ego-Fahrzeugs bedienerfreundlich vorgenommen.

Hierzu wird der mindestens zwei Abbiegefahrstreifen in die gleiche Fahrtrichtung aufweisende Abzweigungsbereich vorzugsweise durch das Assistenzsystem des Ego-Fahrzeugs in mindestens zwei aneinandergrenzende Regelungsbereiche unterteilt. In diesen Regelungsbereichen wird die Längsregelung des Ego-Fahrzeugs durch das Assistenzsystem des Ego-Fahrzeugs unterschiedlich vorgegeben, das heißt in den Regelungsbereichen innerhalb des Abzweigungsbereichs werden unterschiedliche Regelungscharakteristiken für die Längsregelung des Ego-Fahrzeugs vorgegeben.

Insbesondere wird die Längsregelung des Ego-Fahrzeugs durch das Assistenzsystem des Ego-Fahrzeugs in den vorzugsweise durch das Assistenzsystem des Ego-Fahrzeugs definierten Regelungsbereichen innerhalb des Abzweigungsbereichs in Abhängigkeit von eine Spurwechselwahrscheinlichkeit des Ego-Fahrzeugs auf eine Nachbarfahrspur beziehungsweise auf einen Nachbarfahrstreifen der Abbiegefahrstreifen charakterisierenden Kriterien vorgegeben.

Hierzu wird vorzugsweise die Art der Betätigung des Blinkerhebels des Ego-Fahrzeugs als erstes Kriterium zur Beurteilung der Spurwechselwahrscheinlichkeit des Ego-Fahrzeugs auf eine Nachbarfahrspur beziehungsweise auf einen Nachbarfahrstreifen der Abbiegefahrstreifen herangezogen. Somit wird die Längsregelung des Ego-Fahrzeugs in den Regelungsbereichen abhängig von der vom Fahrer des Ego-Fahrzeugs vorgenommenen Art des Blinkens als erstem die Spurwechselwahrscheinlichkeit des Ego-Fahrzeugs charakterisierenden Kriterium und damit abhängig vom Blinkmodus des Ego-Fahrzeugs mit einer unterschiedlichen Regelungscharakteristik vorgegeben. Das heißt, je nachdem, ob vom Fahrer des Ego-Fahrzeugs als Blinkmodus ein Komfortblinken mit einem kurzen Antippen des Blinkerhebels vorgenommen wird oder ob vom Fahrer des Ego-Fahrzeugs ein Rastblinken als Blinkmodus mit einer zum Einrasten des Blinkerhebels führenden Betätigung des Blinkerhebels vorgenommen wird, hat dies entsprechende Auswirkungen auf die vorgegebene Regelungscharakteristik bei der Längsregelung des Ego-Fahrzeugs.

Neben dem Kriterium des Blinkmodus als erstem Kriterium zur Beurteilung der Spurwechselwahrscheinlichkeit des Ego-Fahrzeugs, können noch weitere Kriterien zur Beurteilung der Spurwechselwahrscheinlichkeit des Ego-Fahrzeugs herangezogen werden. Insbesondere kann als die Spurwechselwahrscheinlichkeit des Ego-Fahrzeugs charakterisierendes weiteres Kriterium die Annäherung des Ego-Fahrzeugs an die die Abbiegefahrstreifen trennende Fahrbahnmarkierung herangezogen werden oder als die Spurwechselwahrscheinlichkeit des Ego-Fahrzeugs charakterisierendes weiteres Kriterium kann das Überfahren der die Abbiegefahrstreifen trennenden Fahrbahnmarkierung herangezogen werden und/oder als die Spurwechselwahrscheinlichkeit des Ego-Fahrzeugs charakterisierendes weiteres Kriterium kann eine Lenkwinkeländerung des Ego-Fahrzeugs in Richtung der die Abbiegefahrstreifen trennenden Fahrbahnmarkierung herangezogen werden. Zusätzlich oder alternativ hierzu kann als die Spurwechselwahrscheinlichkeit des Ego-Fahrzeugs charakterisierendes weiteres Kriterium auch die Streckenführung für eine Navigationsroute des Ego-Fahrzeugs herangezogen werden, aus deren Navigationsdaten ein gegebenenfalls vorzunehmender Spurwechsel des Ego-Fahrzeugs abgeleitet werden kann.

In einer bevorzugten Weiterbildung der Erfindung wird der Abzweigungsbereich der Fahrbahn vorzugsweise durch das Assistenzsystem des Ego-Fahrzeugs in einen bis zur Verzweigungsstelle reichenden Annäherungsbereich und in einen nach der Verzweigungsstelle liegenden Folgebereich als Regelungsbereiche unterteilt. In diesen Regelungsbereichen wird dann die Längsregelung des Ego-Fahrzeugs durch das Assistenzsystem des Ego-Fahrzeugs unterschiedlich mit einer unterschiedlichen Regelungscharakteristik vorgegeben.

In einer weiteren bevorzugten Weiterbildung der Erfindung wird der Annäherungsbereich vorzugsweise durch das Assistenzsystem des Ego-Fahrzeugs ebenfalls unterteilt, und zwar in einen unmittelbar vor der Verzweigungsstelle liegenden bis zur Verzweigungsstelle reichenden Nahbereich und in einen beabstandet zur Verzweigungsstelle vor dem Nahbereich liegenden Fernbereich. Auch in diesen Regelungsbereichen wird dann die Längsregelung des Ego-Fahrzeugs durch das Assistenzsystem des Ego-Fahrzeugs unterschiedlich und damit mit einer unterschiedlichen Regelungscharakteristik vorgegeben.

Weiterhin wird das Ende des Folgebereichs und damit auch das Ende des Abzweigungsbereichs bei einer Überleitung der mindestens zwei Abbiegefahrstreifen in mindestens einen Geradeausfahrstreifen vorzugsweise durch das Assistenzsystem des Ego-Fahrzeugs anhand des Schnittpunkts der Abbiegefahrstreifen mit dem mindestens einen Geradeausfahrstreifen festgelegt.

In einer ersten bevorzugten Ausführungsform der Erfindung werden die durch das Assistenzsystem des Ego-Fahrzeugs definierten Regelungsbereiche und damit insbesondere auch die Bereichsgrenzen der einzelnen Regelungsbereiche abstandsbasiert mittels im Ego-Fahrzeug gespeicherten Navigationsdaten festgelegt. Das heißt, für die einzelnen Regelungsbereiche des Abzweigungsbereichs werden anhand von im Ego-Fahrzeug vorliegendem Kartenmaterial feste Werte festgelegt. Insbesondere werden diese festen Werte für die Bereichsgrenzen der einzelnen Regelungsbereiche in Bezug auf die Verzweigungsstelle des Verzweigungsbereichs und hierbei relativ zur Verzweigungsstelle des Verzweigungsbereichs festgelegt.

In einer zur ersten bevorzugten Ausführungsform der Erfindung alternativen bevorzugten Ausführungsform der Erfindung werden die durch das Assistenzsystem des Ego-Fahrzeugs definierten Regelungsbereiche und damit insbesondere auch die Bereichsgrenzen der einzelnen Regelungsbereiche anhand der von anderen Fahrzeugen generierten Schwarmdaten festgelegt. Dies erfolgt auf Basis von Wahrscheinlichkeitsbetrachtungen und damit einer bei anderen Fahrzeugen ermittelten Häufigkeit für einen Spurwechsel innerhalb des Abzweigungsbereichs, woraus dann insbesondere auch die einzelnen unterschiedlichen Regelungsbereiche innerhalb des Abzweigungsbereichs abgeleitet werden können. Insbesondere können dann die Bereichsgrenzen der einzelnen Regelungsbereiche auch an die aktuell vorliegenden Gegebenheiten dynamisch angepasst werden.

Vorzugsweise wird beim erfindungsgemäßen Verfahren durch das Assistenzsystem des Ego-Fahrzeugs eine frühzeitige Regelung des Ego-Fahrzeugs auf ein im Abzweigungsbereich auf einem anderen Abbiegefahrstreifen vorausfahrendes Fahrzeug als Nebenspurobjekt dann vorgegeben, wenn im Fernbereich des Abzweigungsbereichs ein Komfortblinken des Ego-Fahrzeugs vorgenommen wird. Dies wird somit als Wunsch des Fahrers des Ego-Fahrzeugs interpretiert, einen Spurwechsel des Ego-Fahrzeugs auf eine Nachbarfahrspur der Abbiegefahrstreifen vorzunehmen, auf dem dann eine Längsregelung des Ego-Fahrzeugs bezüglich eines vorausfahrenden Fahrzeugs vorgenommen werden kann.

Weiterhin wird beim erfindungsgemäßen Verfahren durch das Assistenzsystem des Ego-Fahrzeugs vorzugsweise eine frühzeitige Regelung des Ego-Fahrzeugs auf ein im Abzweigungsbereich auf einem anderen Abbiegefahrstreifen vorausfahrendes Fahrzeug als Nebenspurobjekt dann vorgegeben, wenn im Fernbereich des Abzweigungsbereichs ein Rastblinken des Ego-Fahrzeugs vorgenommen wird und mindestens ein weiteres der genannten, eine Spurwechselwahrscheinlichkeit des Ego-Fahrzeugs charakterisierenden Kriterien vorliegt.

Auch wird beim erfindungsgemäßen Verfahren durch das Assistenzsystem des Ego-Fahrzeugs vorzugsweise eine frühzeitige Regelung des Ego-Fahrzeugs auf ein im Abzweigungsbereich auf einem anderen Abbiegefahrstreifen vorausfahrendes Fahrzeug als Nebenspurobjekt dann vorgegeben, wenn im Nahbereich des Abzweigungsbereichs oder im Folgebereich des Abzweigungsbereichs eine unabhängig vom Blinkmodus vorgenommene Betätigung des Blinkerhebels des Ego-Fahrzeugs durch den Fahrer des Ego-Fahrzeugs erfolgt und mindestens ein weiteres der genannten, eine Spurwechselwahrscheinlichkeit des Ego-Fahrzeugs charakterisierenden Kriterien vorliegt.

Weiterhin beansprucht wird auch ein als Abstandsassistent des Ego-Fahrzeugs zur Längsregelung des Ego-Fahrzeugs ausgebildetes Assistenzsystem des Ego-Fahrzeugs und ein Ego-Fahrzeug, das ein derartiges Assistenzsystem zur Längsregelung des Ego-Fahrzeugs aufweist.

Mit dem vorgeschlagenen Verfahren zum Betreiben eines Assistenzsystems eines Ego-Fahrzeugs zur Längsregelung des Ego-Fahrzeugs kann vorteilhafterweise eine für einen Fahrer des Ego-Fahrzeugs bedienerfreundliche und damit komfortable Längsregelung des Ego-Fahrzeugs auch bei einer oftmals unklaren Verkehrssituation in einem Verzweigungsbereich, der einen Abzweigungsberiech mit mindestens zwei in die gleiche Fahrtrichtung führenden Abbiegefahrstreifen aufweist, auf einfache Weise intuitiv verständlich vorgenommen werden.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: die Verkehrssituation in einem Verzweigungsbereich mit zwei in die gleiche Fahrtrichtung führenden Abbiegefahrstreifen;
- Fig. 2: .eine schematische Darstellung des Abzweigungsbereichs mit den einzelnen Regelungsbereichen innerhalb des Abzweigungsbereich.

Bei dem im Folgenden erläuterten Ausführungsbeispiel handelt es sich um ein bevorzugtes Ausführungsbeispiel der Erfindung. Bei dem Ausführungsbeispiel stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist das beschriebenen Ausführungsbeispiel auch durch weitere der bereits beschriebenen Merkmale der Erfindung ergänzbar.

In den Figuren sind funktionsgleiche Elemente jeweils mit denselben Bezugszeichen versehen.

Vom Assistenzsystem des Ego-Fahrzeugs wird auf der Fahrtroute des Ego-Fahrzeugs 1 auf Basis des im Ego-Fahrzeug 1 gespeicherten Kartenmaterials eine Analyse hinsichtlich des Auftretens von Verzweigungsbereichen 5 durchgeführt, bei dem ein Abzweigungsbereich 20 mit mindestens zwei in die gleiche Fahrtrichtung führenden Abbiegespuren beziehungsweise Abbiegefahrstreifen 3, 4 ausgebildet ist. Beispielsweise wird eine derartige Analyse hinsichtlich des Auftretens von Verzweigungsbereichen 5 mit einem mindestens zwei in die gleiche Fahrtrichtung führenden Abbiegespuren beziehungsweise Abbiegefahrstreifen 3, 4 aufweisenden Abzweigungsbereich 20, auf der Fahrtroute des Ego-Fahrzeugs 1 in einem auf der Fahrtroute vor dem Ego-Fahrzeug 1 liegenden Bereich von beispielsweise mindestens 150 m bis 500 m vorgenommen.

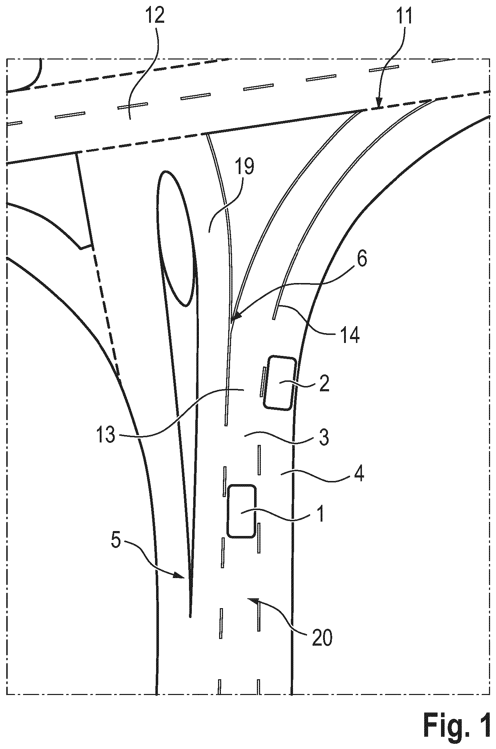

In der Figur 1 ist eine derartige Verkehrssituation mit einem einen Abzweigungsbereich 20 aufweisenden Verzweigungsbereich 5 dargestellt, bei dem auf der Fahrbahn 13 im Abzweigungsbereich 20 zwei Abbiegespuren beziehungsweise Abbiegefahrstreifen 3, 4 als Rechtsabbiegespuren in die gleiche Fahrtrichtung nach rechts von der Geradeausfahrspur beziehungsweise von dem Geradeausfahrstreifen 19 abzweigen. Im Verzweigungsbereich 5 werden die beiden Abbiegespuren beziehungsweise Abbiegefahrstreifen 3, 4 gemeinsam nebeneinander bis zum Ende des Verzweigungsbereichs 5 geführt, an dem sie an der Einmündungsstelle 11 in die Durchgangsfahrspur beziehungsweise den Durchgangsfahrstreifen 12 einmünden und in diesen Durchgangsfahrstreifen 12 überführt werden beziehungsweise in diesen Durchgangsfahrstreifen 12 übergeleitet werden. Innerhalb des Abzweigungsbereichs 20 mit den beiden Abbiegespuren beziehungsweise Abbiegefahrstreifen 3, 4 befindet sich das Ego-Fahrzeug 1 auf der linken Abbiegespur beziehungsweise auf dem linken Abbiegefahrstreifen 3. Weiterhin befindet sich innerhalb des Abzweigungsbereichs 20 mit den beiden Abbiegespuren beziehungsweise Abbiegefahrstreifen 3, 4 auch ein dem Ego-Fahrzeug 1 vorausfahrendes Fahrzeug 2 auf der rechten Abbiegespur beziehungsweise auf dem rechen Abbiegefahrstreifen 4 vor dem Ego-Fahrzeug 1.

Um auch im Verzweigungsbereich 5 und insbesondere im Abzweigungsbereich 20 eine komfortable und für den Fahrer des Ego-Fahrzeugs 1 bedienerfreundliche Längsregelung des Ego-Fahrzeugs 1 durch das Assistenzsystem des Ego-Fahrzeugs 1 bereitzustellen, wird der Abzweigungsbereich 20 in mehrere Regelungsbereiche 7, 8, 9, 10 unterteilt, in denen unterschiedliche Regelungscharakteristiken für die Längsregelung des Ego-Fahrzeugs 1 durch das Assistenzsystem des Ego-Fahrzeugs 1 vorgegeben werden.

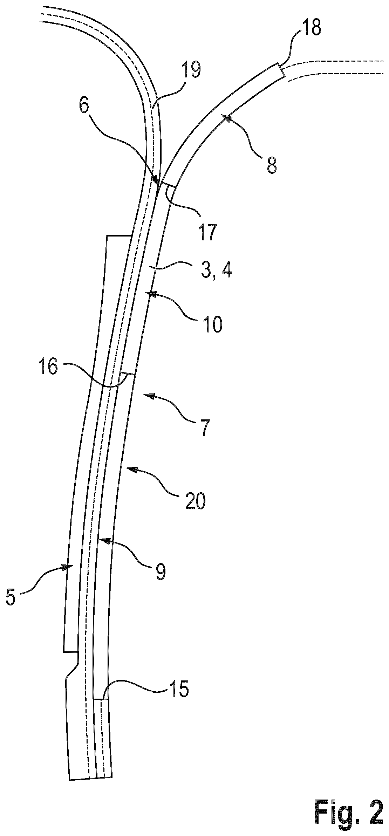

Gemäß der Figur 2 werden für den Abzweigungsbereich 20 zwei aneinandergrenzende und insbesondere auf die Verzweigungsstelle 6 des Verzweigungsbereichs 5 bezogene Regelungsbereiche 7, 8 festgelegt, ein vor der Verzweigungsstelle 6 des Verzweigungsbereichs 5 liegender Annäherungsbereich 7 und ein nach der Verzweigungsstelle 6 des Verzweigungsbereichs 5 liegender Folgebereich 8. Der Anfang des Annäherungsbereichs 7 beziehungsweise der Bereichsbeginn 15 des Annäherungsbereichs 7 wird abstandsbasiert beispielsweise in einer Entfernung von 100 m bis 200 m vor der Verzweigungsstelle 6 des Verzweigungsbereichs 5 auf Basis von im Ego-Fahrzeug 1 vorliegenden Navigationsdaten festgelegt. Insbesondere beginnt der Annäherungsbereich 7 an dem Punkt, an dem der Abzweigungsbereich 20 beginnt und die beiden Abbiegespuren beziehungsweise Abbiegefahrstreifen 3, 4 abzweigen, das heißt der Bereichsbeginn 15 des Annäherungsbereichs 7 liegt an der Stelle, an dem die beiden Abbiegespuren beziehungsweise Abbiegefahrstreifen 3, 4 von der Geradeausfahrspur beziehungsweise von dem Geradeausfahrstreifen 19 getrennt werden. Das Ende des Annäherungsbereichs 7 beziehungsweise das Bereichsende 17 des Annäherungsbereichs 7 und damit gleichzeitig der Anfang des Folgebereichs 8 beziehungsweise der Bereichsbeginn 17 des Folgebereichs 8 wird durch die Verzweigungsstelle 6 des Verzweigungsbereichs 5 festgelegt und fällt insbesondere mit der Verzweigungsstelle 6 des Verzweigungsbereichs 5 zusammen. Das Ende des Folgebereichs 8 beziehungsweise das Bereichsende 18 des Folgebereichs 7 wird abstandsbasiert beispielsweise in einer Entfernung von 10 m bis 20 m hinter der Verzweigungsstelle 6 des Verzweigungsbereichs 5 auf Basis von im Ego-Fahrzeug 1 vorliegenden Navigationsdaten festgelegt. Insbesondere wird das Ende des Folgebereichs 8 aber anhand des Schnittpunkts der beiden Abbiegefahrstreifen 3, 4 mit dem Durchgangsfahrstreifen 12 festgelegt, das heißt, das Ende des Folgebereichs 8 liegt hierdurch an der Einmündungsstelle 11 der beiden Abbiegefahrstreifen 3, 4 in den Durchgangsfahrstreifen 12.

Der Annäherungsbereich 7 wird vorzugsweise zusätzlich in zwei aneinandergrenzende Regelungsbereiche 9, 10 unterteilt, und zwar in einen unmittelbar vor der Verzweigungsstelle 6 des Verzweigungsbereichs 5 liegenden Nahbereich 10 und in einen an den Nahbereich 10 angrenzenden und beabstandet von der Verzweigungsstelle 6 des Verzweigungsbereichs 5 vor dem Nahbereich 10 liegenden Fernbereich 9. Der Bereichsbeginn 15 des Fernbereichs 9 entspricht damit dem Bereichsbeginn 15 des Annäherungsbereichs 7, das Bereichsende 17 des Nahbereichs 10 entspricht damit dem Bereichsende 17 des Annäherungsbereichs 7. Beispielsweise wird bei der Unterteilung des Annäherungsbereichs 7 das Bereichsende 16 des Fernbereichs 9 und damit gleichzeitig der Bereichsbeginn 16 des Nahbereichs 10 abstandsbasiert in einer Entfernung von 50 m vor der Verzweigungsstelle 6 des Verzweigungsbereichs 5 auf Basis von im Ego-Fahrzeug 1 vorliegenden Navigationsdaten festgelegt.

Zur Festlegung der Bereichsgrenzen 15, 16, 17, 18 der Regelungsbereiche 7, 8, 9, 10 oder auch zur Präzisierung der abstandsbasiert definierten Bereichsgrenzen 15, 16, 17, 18 der Regelungsbereiche 7, 8, 9, 10, können auch durch das Befahren des Abzweigungsbereichs 20 durch andere Fahrzeuge gewonnene Schwarmdaten herangezogen werden. Das heißt hieraus wird festgestellt, an welcher Position sich Fahrzeuge im Abzweigungsbereich 20 üblicherweise auf die beiden Abbiegespuren beziehungsweise Abbiegefahrstreifen 3, 4 begeben und ob und an welcher Position diese Fahrzeuge üblicherweise einen Spurwechsel innerhalb des Abzweigungsbereichs 20 von einem Abbiegefahrstreifen 3, 4 auf den anderen Abbiegefahrstreifen 4, 3 vornehmen.

In Abhängigkeit der vom Ego-Fahrzeug 1 im Abzweigungsbereich 20 befahrenen Regelungsbereiche 7, 8, 9, 10, wird die Längsregelung des Ego-Fahrzeugs 1 vom Assistenzsystem des Ego-Fahrzeugs 1 unterschiedlich vorgegeben, das heißt mit unterschiedlichen Regelungscharakteristiken durchgeführt. Insbesondere wird hierbei auch der jeweilige Blinkmodus des Ego-Fahrzeugs 1 im Abzweigungsbereich 20 bei der entsprechenden Umsetzung der Längsregelung des Ego-Fahrzeugs 1 berücksichtigt.

Beim Befahren des Fernbereichs 9 des Annäherungsbereichs 7 befindet sich das Ego-Fahrzeug 1 im Abzweigungsbereich 20 noch in einer größeren Entfernung vor der Verzweigungsstelle 6 des Verzweigungsbereichs 5. Bei einer innerhalb des Fernbereichs 9 des Annäherungsbereichs 7 erfolgenden Komfortblinken des Ego-Fahrzeugs 1, das heißt bei einem Blinkmodus, bei dem der Blinkerhebel des Ego-Fahrzeugs 1 nur einmal angetippt wird und der Fahrtrichtungsanzeiger beziehungsweise der Blinker des Ego-Fahrzeugs 1 daraufhin kurzzeitig blinkt, beispielsweise dreimal blinkt, wird angenommen, dass der Fahrer des Ego-Fahrzeugs 1 hierdurch einen Spurwechsel von der eigenen Abbiegespur beziehungsweise von dem eigenen Abbiegefahrstreifen 3 auf die andere Abbiegespur beziehungsweise auf den anderen Abbiegefahrstreifen 4 vornehmen will. Hierdurch wird eine frühzeitige Reaktion des Assistenzsystems zur Längsregelung des Ego-Fahrzeugs 1 auf das auf der Abbiegespur beziehungsweise auf dem Abbiegefahrstreifen 4 als Nebenspurobjekt vorausfahrende Fahrzeug 2 vorgenommen. Bei einer innerhalb des Fernbereichs 9 des Annäherungsbereichs 7 erfolgenden Rastblinken des Ego-Fahrzeugs 1, das heißt bei einem Blinkmodus, bei dem der Blinkerhebel des Ego-Fahrzeugs 1 einrastet und so lange eingerastet bleibt und der Fahrtrichtungsanzeiger beziehungsweise der Blinker des Ego-Fahrzeugs 1 damit so lange blinkt, bis der Blinkerhebel des Ego-Fahrzeugs 1 wieder zurück in die Ausgangsposition gesetzt wird, wird angenommen, dass der Fahrer des Ego-Fahrzeugs 1 hierdurch lediglich einen Abbiegerwunsch von der Geradeausfahrspur beziehungsweise von dem Geradeausfahrstreifen 19 auf die Abbiegespur beziehungsweise auf den Abbiegefahrstreifen 3 anzeigen möchte. Um eine Reaktion des Assistenzsystems zur Längsregelung des Ego-Fahrzeugs 1 auf das auf der Abbiegespur beziehungsweise auf dem Abbiegefahrstreifen 4 vorausfahrende Fahrzeug 2 zu generieren, ist neben der Betätigung des Blinkerhebels des Ego-Fahrzeugs 1 im Blinkmodus Rastblinken noch das Vorhandensein mindestens eines weiteren eine hohe Spurwechselwahrscheinlichkeit des Ego-Fahrzeugs 1 charakterisierenden Kriteriums erforderlich. Als derartiges Kriterium für eine hohe Spurwechselwahrscheinlichkeit des Ego-Fahrzeugs 1 kann beispielsweise eine Annäherung des Ego-Fahrzeugs 1 an die die beiden Abbiegespuren beziehungsweise Abbiegefahrstreifen 3, 4 trennende Fahrbahnmarkierung 14 herangezogen werden oder ein Überfahren dieser Fahrbahnmarkierung 14 durch das Ego-Fahrzeug 1 oder eine Lenkwinkeländerung des Ego-Fahrzeugs 1 in Richtung der Fahrbahnmarkierung 14. Liegt mindestens eines dieser weiteren Kriterien für eine hohe Spurwechselwahrscheinlichkeit des Ego-Fahrzeugs 1 vor, wird ebenfalls eine frühzeitige Reaktion des Assistenzsystems zur Längsregelung des Ego-Fahrzeugs 1 auf das auf der Abbiegespur beziehungsweise auf dem Abbiegefahrstreifen 4 als Nebenspurobjekt vorausfahrende Fahrzeug 2 vorgenommen.

Falls der Fahrtrichtungsanzeiger beziehungsweise der Blinker des Ego-Fahrzeugs 1 jedoch bereits vor dem Befahren des Fernbereichs 9 und damit auch vor dem Befahren des Annäherungsbereichs 7 aktiviert wurde und das Ego-Fahrzeug 1 damit bereits beim Einfahren in den Fernbereich 9 und damit auch bereits beim Einfahren in den Annäherungsbereich 7 blinkt, wird in diesem Falle ebenfalls eine frühzeitige Reaktion des Assistenzsystems zur Längsregelung des Ego-Fahrzeugs 1 auf das auf der Abbiegespur beziehungsweise auf dem Abbiegefahrstreifen 4 als Nebenspurobjekt vorausfahrende Fahrzeug 2 vorgenommen.

Beim Befahren des Nahbereichs 10 des Annäherungsbereichs 7 befindet sich das Ego-Fahrzeug 1 im Abzweigungsbereich 20 in einer recht geringen Entfernung vor der Verzweigungsstelle 6 des Verzweigungsbereichs 5. Bei einer innerhalb des Nahbereichs 10 des Annäherungsbereichs 7 erfolgenden Betätigung des Blinkerhebels des Ego-Fahrzeugs 1, wird eine Reaktion des Assistenzsystems zur Längsregelung des Ego-Fahrzeugs 1 auf das auf der Abbiegespur beziehungsweise auf dem Abbiegefahrstreifen 3 als Nebenspurobjekt vorausfahrende Fahrzeug 2 nur dann vorgenommen, wenn unabhängig von dem gewählten Blinkmodus bei der Betätigung des Blinkerhebels des Ego-Fahrzeugs 1 mindestens ein weiteres eine hohe Spurwechselwahrscheinlichkeit des Ego-Fahrzeugs 1 charakterisierendes Kriterium vorliegt. Als derartige Kriterien für eine hohe Spurwechselwahrscheinlichkeit des Ego-Fahrzeugs 1 können wiederum die genannten Kriterien herangezogen werden.

In analoger Weise wird beim Befahren des Folgebereichs 8 eine Reaktion des Assistenzsystems zur Längsregelung des Ego-Fahrzeugs 1 auf das auf der Abbiegespur beziehungsweise auf dem Abbiegefahrstreifen 3 als Nebenspurobjekt vorausfahrende Fahrzeug 2 nur dann vorgenommen, wenn unabhängig von dem gewählten Blinkmodus bei der Betätigung des Blinkerhebels des Ego-Fahrzeugs 1 mindestens ein weiteres eine hohe Spurwechselwahrscheinlichkeit des Ego-Fahrzeugs 1 charakterisierendes Kriterium vorliegt. Als derartige Kriterien für eine hohe Spurwechselwahrscheinlichkeit des Ego-Fahrzeugs 1 können wiederum die genannten Kriterien herangezogen werden.

Falls der Fahrtrichtungsanzeiger beziehungsweise der Blinker des Ego-Fahrzeugs 1 innerhalb des Abzweigungsbereichs 20 und damit im Annäherungsbereich 7 oder im Folgebereich 8 aktiviert wurde und auch noch beim Verlassen des Folgebereichs 8 und damit beim Verlassen des Abzweigungsbereichs 20 aktiv ist, bleibt die innerhalb des Abzweigungsbereichs 20 durch das Assistenzsystem des Ego-Fahrzeugs 1 vorgegebene Regelungscharakteristik bestehen. Das heißt, eine Reaktion des Assistenzsystems zur Längsregelung des Ego-Fahrzeugs 1 auf ein vorausfahrendes Fahrzeug wird nach dem Verlassen des Folgebereichs 8 und damit nach dem Verlassen des Abzweigungsbereichs 5 nur dann vorgenommen, wenn neben der Betätigung des Blinkerhebels des Ego-Fahrzeugs 1 mindestens ein weiteres eine hohe Spurwechselwahrscheinlichkeit des Ego-Fahrzeugs 1 charakterisierendes Kriterium vorliegt. Erst wenn der Fahrtrichtungsanzeiger beziehungsweise der Blinker des Ego-Fahrzeugs 1 wieder deaktiviert wurde, wird auch wieder die standardmäßige Längsregelung des Ego-Fahrzeugs 1 durch das Assistenzsystem des Ego-Fahrzeugs 1 vorgegeben.

### Bezugszeichenliste

- 1: Ego-Fahrzeug
- 2: vorausfahrendes Fahrzeug
- 3: Abbiegespur
- 4: Nebenspur
- 5: Verzweigungsbereich
- 6: Verzweigungsstelle
- 7: Annäherungsbereich
- 8: Folgebereich
- 9: Fernbereich
- 10: Nahbereich
- 11: Einmündungsstelle
- 12: Durchgangsfahrstreifen
- 13: Fahrbahn
- 14: Fahrbahntrennung
- 15: Anfang Fernbereich
- 16: Ende Fernbereich / Anfang Nahbereich
- 17: Ende Nahbereich / Anfang Folgebereich
- 18: Ende Folgebereich
- 19: Geradeausfahrspur
- 20: Abzweigungsbereich

## Patentansprüche

1. Verfahren zum Betreiben eines Assistenzsystems eines Ego-Fahrzeugs (1) zur Längsregelung des Ego-Fahrzeugs (1) mittels eines geschwindigkeitsabhängigen Wunschabstands zu einem vorausfahrenden Fahrzeug (2),
**dadurch gekennzeichnet,**
**dass** bei einer Fahrbahn (13) mit einem eine Verzweigungsstelle (6) ausbildenden Verzweigungsbereich (5), bei dem in einem Abzweigungsbereich (20) mindestens zwei Abbiegefahrstreifen (3, 4) in die gleiche Fahrtrichtung geführt werden, der Abzweigungsbereich (20) in mindestens zwei aneinandergrenzende Regelungsbereiche (7, 8, 9, 10) unterteilt wird, in denen die Längsregelung des Ego-Fahrzeugs (1) mit einer unterschiedlichen Regelungscharakteristik vorgegeben wird.

2. Verfahren nach Anspruch 1,
**dadurch gekennzeichnet,**
**dass** der Abzweigungsbereich (20) des Verzweigungsbereichs (5) in einen vor der Verzweigungsstelle (6) bis zur Verzweigungsstelle (6) reichenden Annäherungsbereich (7) und in einen nach der Verzweigungsstelle (6) liegenden Folgebereich (8) als Regelungsbereiche unterteilt wird, in denen die Längsregelung des Ego-Fahrzeugs (1) mit einer unterschiedlichen Regelungscharakteristik vorgegeben wird.

3. Verfahren nach Anspruch 2,
**dadurch gekennzeichnet,**
**dass** der Annäherungsbereich (7) in einen unmittelbar vor der Verzweigungsstelle (6) liegenden bis zur Verzweigungsstelle (6) reichenden Nahbereich (10) und in einen beabstandet zur Verzweigungsstelle (6) vor dem Nahbereich (10) liegenden Fernbereich (9) unterteilt wird, in denen die Längsregelung des Ego-Fahrzeugs (1) mit einer unterschiedlichen Regelungscharakteristik vorgegeben wird.

4. Verfahren nach Anspruch 2 oder 3,
**dadurch gekennzeichnet,**
**dass** bei einer Überleitung der mindestens zwei Abbiegefahrstreifen (3, 4) des Abzweigungsbereichs (20) am Bereichsende (18) des Abzweigungsbereichs (20) in mindestens einen Durchgangsfahrstreifen (12) das Bereichsende (18) des Folgebereichs (8) anhand des Schnittpunkts (11) der mindestens zwei Abbiegefahrstreifen (3, 4) mit dem mindestens einen Durchgangsfahrstreifen (12) festgelegt wird.

5. Verfahren nach einem der Ansprüche 1 bis 4,
**dadurch gekennzeichnet,**
**dass** die Regelungsbereiche (7, 8, 9, 10) abstandsbasiert mittels im Ego-Fahrzeug (1) gespeicherten Navigationsdaten festgelegt werden und/oder basierend auf Wahrscheinlichkeitsbetrachtungen auf Basis der von anderen Fahrzeugen generierten Schwarmdaten festgelegt werden.

6. Verfahren nach einem der Ansprüche 1 bis 5,
**dadurch gekennzeichnet,**
**dass** die Längsregelung des Ego-Fahrzeugs (1) in den Regelungsbereichen (7, 8, 9, 10) abhängig von eine Spurwechselwahrscheinlichkeit des Ego-Fahrzeugs (1) charakterisierenden Kriterien vorgegeben wird.

7. Verfahren nach Anspruch 6,
**dadurch gekennzeichnet,**
**dass** die Längsregelung des Ego-Fahrzeugs (1) in den Regelungsbereichen (7, 8, 9, 10) abhängig von der Art der Betätigung des Blinkerhebels des Ego-Fahrzeugs (1) vorgegeben wird.

8. Verfahren nach Anspruch 6 oder 7,
**dadurch gekennzeichnet,**
**dass** eine Längsregelung des Ego-Fahrzeugs (1) auf ein im Verzweigungsbereich (5) auf einem anderen Abbiegefahrstreifen (4) vorausfahrendes Fahrzeug (2) dann vorgegeben wird, wenn im Fernbereich (9) ein Komfortblinken des Ego-Fahrzeugs (1) vorgenommen wird oder wenn im Fernbereich (9) ein Rastblinken des Ego-Fahrzeugs (1) vorgenommen wird und mindestens ein weiteres eine Spurwechselwahrscheinlichkeit des Ego-Fahrzeugs (1) charakterisierendes Kriterium vorliegt oder wenn im Nahbereich (10) oder im Folgebereich (8) eine Betätigung des Blinkerhebels des Ego-Fahrzeugs (1) vorgenommen wird und mindestens ein weiteres eine Spurwechselwahrscheinlichkeit des Ego-Fahrzeugs (1) charakterisierendes Kriterium vorliegt.

9. Verfahren zum Betreiben eines als Abstandsassistent des Ego-Fahrzeugs (1) ausgebildeten Assistenzsystems nach einem der Ansprüche 1 bis 8.

10. Fahrzeug (1) mit einem nach einem Verfahren der Ansprüche 1 bis 9 betriebenen Assistenzsystem.
